# EUROPEAN PATENT SPECIFICATION

(11) **EP 1 781 732 B1**
(45) Date of publication and mention of the grant of the patent: **03.09.2008**
(21) Application number: 05779283.0
(22) Date of filing: 15.08.2005
(51) Int. Cl.: C08K 5/00, C08K 5/02, C08K 5/12, C08K 5/101

(54) **SURFACE MODIFIERS**
OBERFLÄCHENMODIFIKATOREN
MODIFICATEURS DE SURFACES

(30) Priority: 25.08.2004 EP 04104065
(43) Date of publication of application: 09.05.2007
(73) Proprietor: Ciba Holding Inc., 4057 Basel (CH)
(72) Inventor: SCHNEIDER, Armin, 79106 Freiburg (DE); ZEDDA, Alessandro, CH-4056 Basel (CH); BRUNNER, Martin, CH-4323 Wallbach (CH); GERSTER, Michèle, 4102 Binningen (CH)
(74) Representative: Hoechst, Bruno Werner
(86) International application number: PCT/EP2005/053995
(87) International publication number: WO 2006/021529

(56) References cited:
- WO-A-92/18569
- US-A- 3 438 946
- US-A- 4 346 141
- US-A- 6 127 485
- PATENT ABSTRACTS OF JAPAN vol. 0172, no. 25 (C-1055), 10 May 1993 (1993-05-10) & JP 04 360852 A (NEOS CO LTD), 14 December 1992 (1992-12-14)

## Description

The present invention relates to compositions comprising an organic material, preferably a synthetic polymer, susceptible to oxidative, thermal or light-induced degradation and to esters of perfluorinated alcohols as reducer of surface energy of these materials, for example as oil and water repellency agents for organic materials.

The use of various fluorochemical compositions on fibers and fibrous substrates, such as for example textiles, carpets, paper, leather and non-woven webs to impart oil and water repellency is known for example in U.S. 6,127,485. This reference discloses hydrophobic and oleophobic fibers, films and molded articles comprising synthetic organic polymer wherein dispersed within the fiber, fabric or molded article and present at the surface of the fiber, fabric or molded article are fluorochemical compounds.

JP-A-2000087014 (C.A. 2000: 198216) discloses a composition comprising a fluorine atom-containing polymer and an ester obtained from a polyfluoroalkohol and a carboxylic acid free from a polymerizable unsaturated group.

WO-A-92/18569 and WO-A-95/01396 discloses that permanently soil resistant polymeric compositions that have fluorochemical dispersed throughout the polymer are prepared by melt extrusion of the fluorochemical with the desired polymer. Preferred polymers for extrusion with the fluorochemical are polyester, polypropylene, polyethylene and polyamide.

It has now been found that esters of perfluorinated alcohols are useful for various technical applications such as for example for increasing the oil and water repellency of organic materials like for example synthetic polymers.

The present invention therefore provides a compositions comprising
a) a natural, semisynthetic or synthetic polymer, and
b) at least one melt additive of a compound of the formula I 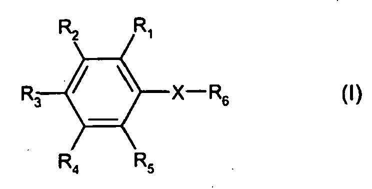
wherein
R₁, R₂, R₃, R₄ and R₅ independently of each other is hydrogen, C₁-C₂₅alkyl, C₁-C₂₅alkoxy, C₇-C₉phenylalkyl, phenyl, 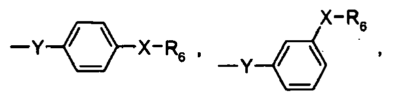 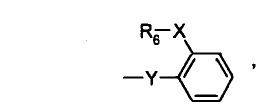 -X-R₆ or each pair of substituents R₁ and R₂ or R₂ and R₃, together with the linking carbon atoms, forms 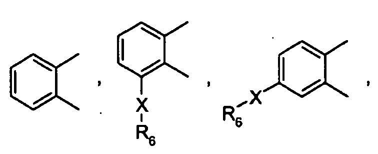 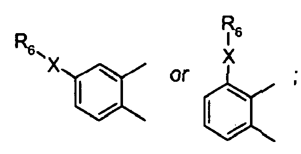 and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl_or C₁-C₂₅alkyl; with the proviso that the compound of the formula I contains at least one -X-R₆ group wherein R₆ is a C₁-C₂₅fluoroalkyl;
X is 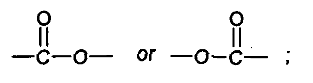 Y is a direct bond, methylene, -CH(CH₃)- or -C(CH₃)₂-; with the proviso that, when R₁,
R₂, R₄ and R₅ are hydrogen, R₃ is -X-R₆, X is 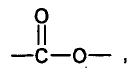 wherein the carbonyl group is attached to the benzene ring, and R₆ is -CH₂CH₂(CF₂)₇CF₃, component (a) is not a fluorine atom-containing polymer.

Alkyl having up to 25 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl. One of the preferred definitions for R₁, R₂, R₃, R₄ and R₅ is, for example, C₁-C₁₈alkyl. An especially preferred definition for R₇ is C₁-C₈alkyl.

Alkoxy having up to 25 carbon atoms is a branched or unbranched radical, for example methoxy, ethoxy, propoxy, isopropoxy, n-butoxy, sec-butoxy, isobutoxy, tert-butoxy, 2-ethylbutoxy, n-pentyloxy, isopentyloxy, 1-methylpentyloxy, 1,3-dimethylbutoxy, n-hexyloxy, 1-methylhexyloxy, n-heptyloxy, isoheptyloxy, 1,1,3,3-tetramethylbutoxy, 1-methylheptyloxy, 3-methylheptyloxy, n-octyloxy, 2-ethylhexyloxy, 1,1,3-trimethylhexyloxy, 1,1,3,3-tetramethyl-pentoxy, nonyloxy, decyloxy, undecyloxy, 1-methylundecyloxy, dodecyloxy, 1,1,3,3,5,5-hexamethylhexyloxy, tridecyloxy, tetradecyloxy, pentadecyloxy, hexadecyloxy, heptadecyl-oxy, octadecyloxy, icosyloxy or docosyloxy.

C₁-C₂₅fluoroalkyl is for example fluoromethyl, 2-fluoroethyl, 3-fluoropropyl, 4-fluorobutyl, 5-fluoropentyl, 6-fluorohexyl, 7-fluoroheptyl, difluoromethyl, trifluoromethyl, pentafluoroethyl, pentafluorobutyl or perfluoroalkyl such as for example -CH₂CH₂(CF₂)₇CF₃.

C₇-C₉Phenylalkyl is, for example, benzyl, α-methylbenzyl, α,α-dimethylbenzyl or 2-phenylethyl. Preference is given to benzyl.

Interesting compositions comprise as component (b) at least a compound of the formula I wherein
R₁, R₂, R₃, R₄ and R₅ independently of each other is hydrogen, C₁-C₁₈alkyl, C₁-C₁₈alkoxy, benzyl, phenyl, -X-R₆ or each pair of substituents R₁ and R₂ or R₂ and R₃, together with the linking carbon atoms, forms a benzene ring; and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl or C₁-C₁₈alkyl; with the proviso that the compound of the formula I contains at least one -X-R₆ group wherein R₆ is C₁-C₂₅fluoroalkyl;
X is 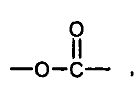 wherein the carbonyl group is attached to the aromatic ring.

Particular preference is given to compositions comprising as component (b) at least a compound of the formula I wherein
R₁, R₂, R₃, R₄ and R₅ independently of each other is hydrogen, C₁-C₈alkyl, C₄-C₁₈alkoxy, phenyl, -X-R₆ or the pair of substituents R₁ and R₂, together with the linking carbon atoms, forms a benzene ring; and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl or C₁-C₁₈alkyl;
X is 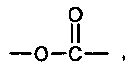 wherein the carbonyl group is attached to the aromatic ring.

Of interest are compositions comprising as component (b) at least a compound of the formula I wherein
R₁ is hydrogen or C₁-C₄alkyl,
R₂ is hydrogen, C₁-C₄alkyl, -X-R₆, or the pair of substituents R₁ and R₂, together with the linking carbon atoms, forms a benzene ring,
R₃ is hydrogen, C₁-C₄alkyl, phenyl or -X-R₆,
R₄ is hydrogen, C₁-C₄alkyl, C₄-C₁₈alkoxy or -X-R₆,
R₅ is hydrogen or -X-R₆; and with the proviso that at least two radicals from the group of R₁ to R₅ are hydrogen; and with the proviso that at least one of the radicals from the group of R₁ to R₅ is not hydrogen;
R₆ is C₄-C₁₈fluoroalkyl or C₁-C₁₈alkyl; with the proviso that the compound of the formula I contains at least one -X-R₆ group wherein R₆ is C₄-C₁₈fluoroalkyl; and
X is 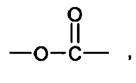 wherein the carbonyl group is attached to the aromatic ring.

Also of interest are compositions comprising as component (b) at least one compound of the formula I, wherein
R₁ is hydrogen,
R₂ is hydrogen, -X-R₆, or the pair of substituents R₁ and R₂, together with the linking carbon atoms, forms a benzene ring,
R₃ is hydrogen, phenyl or -X-R₆,
R₄ is hydrogen, C₄-C₁₈alkoxy or -X-R₆,
R₅ is hydrogen or -X-R₆; and with the proviso that at least two radicals from the group of R₁ to R₅ are hydrogen; and with the proviso that at least one of the radicals from the group of R₁ to R₅ is not hydrogen;
R₆ is -CH₂CH₂(CF₂)₇CF₃ or C₁-C₁₈alkyl; with the proviso that the compound of the formula I contains at least one -X-R₆ group wherein R₆ is -CH₂CH₂(CF₂)₇CF₃; and
X is 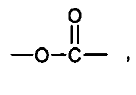 wherein the carbonyl group is attached to the aromatic ring.

The compounds of the formula I can be prepared in per se known manner, for example by esterification of a carboxylic acid with an alcohol.

The compounds of the formula are suitable as oil and water repellency agents for organic materials. Examples of organic materials which may be present in the compositions of the invention are following materials:
1. Polymers of monoolefins and diolefins, for example polypropylene, polyisobutylene, po-lybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature.
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or polym-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE. PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

Organic materials are natural, semi-synthetic or synthetic polymers.

Preferred organic materials are synthetic polymers, most preferably thermoplastic polymers. Especially preferred organic materials are polyacetals, polyolefins such as polypropylene or polyethylene, polyether/polyurethanes, polyesters such as polybutylene terephthalate, polycarbonates or polyamides.

To be singled out for special mention is the efficacy of the compounds of the formula I [component (b)] as reducers of surface energy of the organic materials. Organic materials with low surface energy have intrinsically better properties like for example water and oil repellency, hydrophobicity, barrier properties, easy to clean, self cleaning, antigraffiti or solvent resistance.

The compounds of the formula I will preferably be added to the organic material in concentrations of 0.01 to 10 %, preferably 0.01 to 2 %, typically 0.1 to 2 %, based on the weight of said material.

In addition to components (a) and (b), the compositions of the invention may comprise further additives, such as for example the following:
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphe-nyl)propane, 2,2-bis-(5-tert-butyl-4-hydroxy2-methylphenylr4-n-dodecylmercaptobutane, 1,1,5,5-tetra(5-tert-butyl-4-hydroxy-2-methylphenyl)pentane.
   1.7. O-. N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of -(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylohenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.
   1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.16. Esters of 3.5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'phenyl-p-phenylenediamine, 4-(p-toluenesulfamoyl)diphenylamine, N,N'-dimethyl-N,N'-disec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenyl-amines, a mixture of mono- and dialkylated nonyldiphenylamines, a mixture of mono- and dialkylated dodecyldiphenylamines, a mixture of mono- and dialkylated isopropyl/isohexyl-diphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilizers
   2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 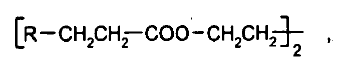 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutylys'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylpheriyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazote, with or without additional ligands.
   2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of -1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-tri-chloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-di-aza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyl-oxyphenyl)-6-(2,4-dimethylphenyl)-1,3,5-triazine, 2-(2-hydroxy-4-octyloxyphenyl)-4,6-bis(4-methylphenylyl,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl}-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octylalpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polyamide stabilizers, for example copper salts in combination with iodides and/or phosphorus compounds and salts of divalent manganese.
10. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyl-dibenzylidene)sorbitol, and 1,3:2,4-di(benzylidene)sorbitol.
12. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butylbenzofuran-2-one, 5,7-di-tert-butyl-3-[4-(2-stearoyloxyethoxy)phenyl]-benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenylys,7-di-tert-butylbenzofu-ran-2-one, 3-(3,4-dimethylphenyl)-5,7-di-tert-butylbenzofuran-2-one, 3-(2,3-dimethylphenyl)-5,7-di-tert-butylbenzofuran-2-one, 3-(2-acetyl-5-isooctylphenyl)-5-isooctylbenzofuran-2-one.

The further additives are typically used in concentrations of 0.01 to 10 %, based on the total weight of the material to be treated.

Preferred compositions of the invention comprise, as other additives phenolic antioxidants, light stabilizers and/or processing stabilizers.

Incorporation of component (b) and, if desired, further additives into the synthetic polymers is carried out by known methods, for example before or during moulding or else by applying the dissolved or dispersed compounds to the synthetic polymer, if appropriate with subsequent slow evaporation of the solvent.

The present invention also relates to a composition in the form of a masterbatch or concentrate comprising component (a) in an amount of from 5 to 90 % and component (b) in an amount of from 5 to 80 % by weight.

Component (b) and, if desired, further additives, can also be added before or during polymerisation or before crosslinking.

Component (b), with or without further additives, can be incorporated in pure form or encapsulated in waxes, oils or polymers into the synthetic polymer.

Component (b), with or without further additives, can also be sprayed onto the synthetic polymer. It is able to dilute other additives (for example the conventional additives indicated above) or their melts so that they too can be sprayed together with these additives onto the polymer. Addition by spraying on during the deactivation of the polymerization catalysts is particularly advantageous, it being possible to carry out spraying using, for example, the steam used for deactivation.

In the case of spherically polymerized polyolefins it may, for example, be advantageous to apply component (b), with or without other additives, by spraying.

The synthetic polymers prepared in this way can be employed in a wide variety of forms, for example as foams, films, fibres, tapes, moulding compositions, as profiles or as binders for coating materials, especially powder coatings, adhesives, putties or especially as thick-layer polyolefin mouldings which are in long-term contact with extractive media, such as, for example, pipes for liquids or gases, films, fibres, geomembranes, tapes, profiles or tanks.

The preferred thick-layer polyolefin mouldings have a layer thickness of from 1 to 50 mm, in particular from 1 to 30 mm, for example from 2 to 10 mm.

The compositions according to the invention can be advantageously used for the preparation of various shaped articles. Examples are:
I-1) Floating devices, marine applications, pontoons, buoys, plastic lumber for decks, piers, boats, kayaks, oars, and beach reinforcements.
I-2) Automotive applications, in particular bumpers, dashboards, battery, rear and front linings, moldings parts under the hood, hat shelf, trunk linings, interior linings, air bag covers, electronic moldings for fittings (lights), panes for dashboards, headlamp glass, instrument panel, exterior linings, upholstery, automotive lights, head lights, parking lights, rear lights, stop lights, interior and exterior trims; door panels; gas tank; glazing front side; rear windows; seat backing, exterior panels, wire insulation, profile extrusion for sealing, cladding, pillar covers, chassis parts, exhaust systems, fuel filter / filler, fuel pumps, fuel tank, body side mouldings, convertible tops, exterior mirrors, exterior trim, fasteners / fixings, front end module, glass, hinges, lock systems, luggage / roof racks, pressed/stamped parts, seals, side impact protection, sound deadener / insulator and sunroof.
I-3) Road traffic devices, in particular sign postings, posts for road marking, car accessories, warning triangles, medical cases, helmets, tires.
I-4) Devices for plane, railway, motor car (car, motorbike) including furnishings.
I-5) Devices for space applications, in particular rockets and satellites, e.g. reentry shields.
I-6) Devices for architecture and design, mining applications, acoustic quietized systems, street refuges, and shelters.
II-1) Appliances, cases and coverings in general and electric/electronic devices (personal computer, telephone, portable phone, printer, television-sets, audio and video devices), flower pots, satellite TV bowl, and panel devices.
II-2) Jacketing for other materials such as steel or textiles.
II-3) Devices for the electronic industry, in particular insulation for plugs, especially computer plugs, cases for electric and electronic parts, printed boards, and materials for electronic data storage such as chips, check cards or credit cards.
II-4) Electric appliances, in particular washing machines, tumblers, ovens (microwave oven), dish-washers, mixers, and irons.
II-5) Covers for lights (e.g. street-lights, lamp-shades).
II-6) Applications in wire and cable (semi-conductor, insulation and cable-jacketing).
II-7) Foils for condensers, refrigerators, heating devices, air conditioners, encapsulating of electronics, semi-conductors, coffee machines, and vacuum cleaners.
III-1) Technical articles such as cogwheel (gear), slide fittings, spacers, screws, bolts, handles, and knobs.
III-2) Rotor blades, ventilators and windmill vanes, solar devices, swimming pools, swimming pool covers, pool liners, pond liners, closets, wardrobes, dividing walls, slat walls, folding walls, roofs, shutters (e.g. roller shutters), fittings, connections between pipes, sleeves, and conveyor belts.
III-3) Sanitary articles, in particular shower cubicles, lavatory seats, covers, and sinks.
III-4) Hygienic articles, in particular diapers (babies, adult incontinence), feminine hygiene articles, shower curtains, brushes, mats, tubs, mobile toilets, tooth brushes, and bed pans.
III-5) Pipes (cross-linked or not) for water, waste water and chemicals, pipes for wire and cable protection, pipes for gas, oil and sewage, guttering, down pipes, and drainage systems.
III-6) Profiles of any geometry (window panes) and siding.
III-7) Glass substitutes, in particular extruded plates, glazing for buildings (monolithic, twin or multiwall), aircraft, schools, extruded sheets, window film for architectural glazing, train, transportation, sanitary articles, and greenhouse.
III-8) Plates (walls, cutting board), extrusion-coating (photographic paper, tetrapack and pipe coating), silos, wood substitute, plastic lumber, wood composites, walls, surfaces, furniture, decorative foil, floor coverings (interior and exterior applications), flooring, duck boards, and tiles.
III-9) Intake and outlet manifolds.
III-10) Cement-, concrete-, composite-applications and covers, siding and cladding, hand rails, banisters, kitchen work tops, roofing, roofing sheets, tiles, and tarpaulins.
IV-1) Plates (walls and cutting board), trays, artificial grass, astroturf, artificial covering for stadium rings (athletics), artificial floor for stadium rings (athletics), and tapes.
IV-2) Woven fabrics continuous and staple, fibers (carpets / hygienic articles / geotextiles /monofilaments; filters; wipes / curtains (shades) / medical applications), bulk fibers (applications such as gown / protection clothes), nets, ropes, cables, strings, cords, threads, safety seat-belts, clothes, underwear, gloves; boots; rubber boots, intimate apparel, garments, swimwear, sportswear, umbrellas (parasol, sunshade), parachutes, paraglides, sails, "balloon-silk", camping articles, tents, airbeds, sun beds, bulk bags, and bags.
IV-3) Membranes, insulation, covers and seals for roofs, tunnels, dumps, ponds, dumps, walls roofing membranes, geomembranes, swimming pools, curtains (shades) / sun-shields, awnings, canopies, wallpaper, food packing and wrapping (flexible and solid), medical packaging (flexible & solid), airbags/safety belts, arm- and head rests, carpets, centre console, dashboard, cockpits, door, overhead console module, door trim, headliners, interior lighting, interior mirrors, parcel shelf, rear luggage cover, seats, steering column, steering wheel, textiles, and trunk trim.
V) Films (packaging, dump, laminating, agriculture and horticulture, greenhouse, mulch, tunnel, silage), bale wrap, swimming pools, waste bags, wallpaper, stretch film, raffia, desalination film, batteries, and connectors.
VI-1) Food packing and wrapping (flexible and solid), bottles.
VI-2) Storage systems such as boxes (crates), luggage, chest, household boxes, pallets, shelves, tracks, screw boxes, packs, and cans.
VI-3) Cartridges, syringes, medical applications, containers for any transportation, waste baskets and waste bins, waste bags; bins, dust bins, bin liners, wheely bins, container in general, tanks for water / used water / chemistry / gas / oil gasoline/ diesel; tank liners, boxes, crates, battery cases, troughs, medical devices such as piston, ophthalmic applications, diagnostic devices, and packing for pharmaceuticals blister.
VII-1) Extrusion coating (photo paper, tetrapack, pipe coating), household articles of any kind (e.g. appliances, thermos bottle / clothes hanger), fastening systems such as plugs, wire and cable clamps, zippers, closures, locks, and snap-closures.
VII-2) Support devices, articles for the leisure time such as sports and fitness devices, gymnastics mats, ski-boots, inline-skates, skis, big foot, athletic surfaces (e.g. tennis grounds); screw tops, tops and stoppers for bottles, and cans.
VII-3) Furniture in general, foamed articles (cushions, impact absorbers), foams, sponges, dish clothes, mats, garden chairs, stadium seats, tables, couches, toys, building kits (boards/figures / balls), playhouses, slides, and play vehicles.
VII-4) Materials for optical and magnetic data storage.
VII-5) Kitchen ware (eating, drinking, cooking, storing).
VII-6) Boxes for CD's, cassettes and video tapes; DVD electronic articles, office supplies of any kind (ball-point pens, stamps and ink-pads, mouse, shelves, tracks), bottles of any volume and content (drinks, detergents, cosmetics including perfumes), and adhesive tapes.
VII-7) Footwear (shoes / shoe-soles), insoles, spats, adhesives, structural adhesives, food boxes (fruit, vegetables, meat, fish), synthetic paper, labels for bottles, couches, artificial joints (human), printing plates (flexographic), printed circuit boards, and display technologies.
VII-8) Devices of filled polymers (talc, chalk, china clay (kaolin), wollastonite, pigments, carbon black, TiO₂, mica, nanocomposites, dolomite, silicates, glass, asbestos).

Thus, a further embodiment of the present invention relates to a shaped article, in particular a film, pipe, profile, bottle, tank or container, fiber containing a composition as described above.

A further embodiment of the present invention relates to a molded article containing a composition as described above. The molding is in particular effected by injection, blow, compression, roto-molding or slush-molding or extrusion.

The present invention also relates to a process for reducing the surface energy of organic materials which comprises incorporating into the organic material at least one compound of the formula I.

The preferred compounds of the formula I or component (b) respectively, and optionally further additives, in the process for reducing the surface energy [e.g. increasing the oil and water repellency] of organic materials are the same as those described for the composition.

A preferred embodiment of the present invention is also the use of a compound of the formula I as reducer of surface energy [e.g. as oil and water repellency agent] for an organic material.

The preferred compounds of the formula I or component (b) respectively, and optionally further additives, in the use as reducer of surface energy [e.g. increasing the oil and water repellency] of organic materials are the same as those described for the composition.

The present invention further provides novel compounds of the formula I 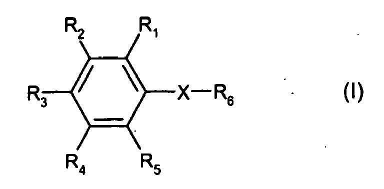 wherein
R₁, R₂, R₃, R₄ and R₅ independently of each other is hydrogen, C₁-C₂₅alkyl, C₁-C₂₅alkoxy, C₇₋C₉phenylalkyl, phenyl, 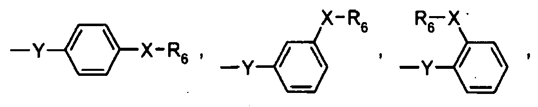 -X-R₆ or each pair of substituents R₁ and R₂ or R₂ and R₃, together with the linking carbon atoms, forms 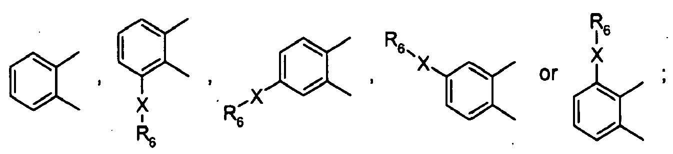 and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl₋or C₁-C₂₅alkyl; with the proviso that the compound of the formula I contains at least one -X-R₆ group wherein R₆ is C₁₋C₂₅fluoroalkyl;
X is 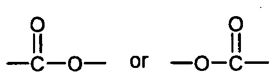 Y is a direct bond, methylene, -CH(CH₃)- or -C(CH₃)₂-, with the proviso that the compound of the formula I is excluded, when R₁, R₂, R₄ and R₅ are hydrogen, R₃ is -X-R₆, X is 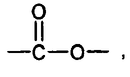 wherein the carbonyl group is attached to the benzene ring, and-R₆ is -CH₂CH₂(CF₂)₇CF₃.

Of special interest are the compounds of the formula I wherein
R_{1,} R₂, R₃, R₄ and R₅ independently of each other is hydrogen, C₁-C₈alkyl, C₄-C₁₈alkoxy, phenyl, -X-R₆ or the pair of substituents R₁ and R₂, together with the linking carbon atoms, forms a benzene ring; and with the proviso that at least two radicals from the group of R₁ to R₅ are hydrogen; and with the proviso that at least one of the radicals from the group of R₁to R₅ is not hydrogen;
R₆ is C₁-C₂₅fluoroalkyl or C₁-C₁₈alkyl; with the proviso that the compound of the formula I contains at least one -X-R₆ group wherein R₆ is C₁-C₂₅fluoroalkyl;
X is 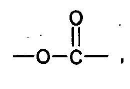 wherein the carbonyl group is attached to the aromatic ring.

The preferred meanings of the general symbols in the novel compounds of the formula la are the same as the preferred meanings of the general symbols set out in relation to the compositions of the invention.

The following examples illustrate the invention further. Parts or percentages relate to weight.

### Example 1: Preparation of the compound of the formula 101.

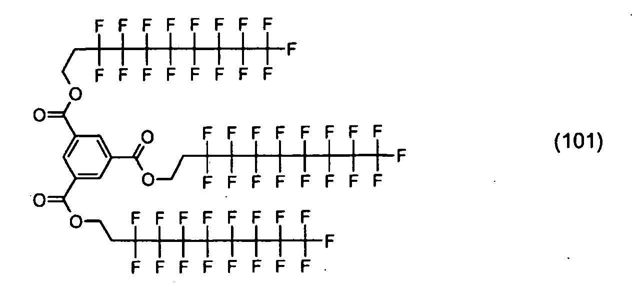

35.1 g (0.08 mol) of the fluorinated alcohol (Zonyl BA-L) and 8g (0.08 mol) of triethylamine are dissolved in 100 ml of toluene. 7g (0.026 mol) of 1,3,5-benzenetricarbonyl trichloride is dissolved in 80 ml of toluene and slowly dropped to the reaction mixture at 50°C under nitrogen atmosphere. The reaction mixture is stirred for 8 hours at 50°C, followed by refluxing for 3 hours. After cooling down to room temperature, the precipitated product is filtered off. The white product is washed three times with hot water and then dried to give 32.4 g (80.7 %) of the compound of the formula 101, m.p. 79-81°C. ¹H NMR: (400 MHz, CDCl₃): δ = 8.75 (s, 3H, CH=), δ = 4.67 (m, 6H, CH₂CF₂), δ = 2.82 (m, 6H, CH₂O).

### Example 2: Preparation of the compound of the formula 102.

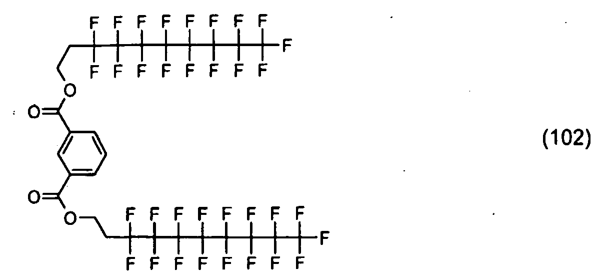

5 g (11.3 mmol) of the fluorinated alcohol (Zonyl BA-L) and 1.1g (11.3 mmol) of dry triethylamine are dissolved in 20 ml of toluene. 1.16g (5.7 mmol) of 1,3-phthaloyl chloride is dissolved in 10 ml of toluene and slowly dropped to the reaction mixture at 20°C under nitrogen atmosphere. The reaction mixture is stirred for 8 hours at 20°C. The solvent is evaporated and the raw product is purified by column chromatography using dichloromethane as solvent. The pure fractions are collected and the solvent distilled off to give 4.4 g (73 %) of the compound of the formula 102, m.p. 41°C. ¹H NMR: (400 MHz, CDCl₃): δ = 8.68 (s, 1H, *CH*=), δ = 8.28 (m, 2H, *CH*=), δ = 7.59 (m, 1H, *CH*=), δ = 4.67 (m, 4H, *CH*₂CF₂), δ = 2.64 (m, 4H, CH₂O).

### Example 3: Preparation of the compound of the formula 103.

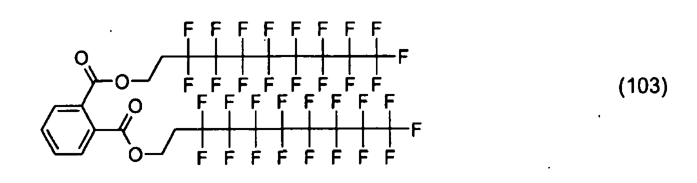

5 g (11.3 mmol) of the fluorinated alcohol (Zonyl BA-L) and 1.1g (11.3 mmol) of dry triethylamine are dissolved in 20 ml of toluene. 1.16g (5.7 mmol) of phthaloyl chloride is dissolved in 10 ml of toluene and slowly dropped to the reaction mixture at 20°C under nitrogen atmosphere. The reaction mixture is stirred for 8 hours at 20°C. The solvent is evaporated and the raw product is purified by column chromatography using dichloromethane as solvent. The pure fractions are collected and the solvent distilled off to give 3.3 g (55 %) of the compound of the formula 103. ¹H NMR: (400 MHz, CDCl₃): δ = 7.72 (m, 2H, *CH*=), δ = 7.61 (m, 2H, *CH*=), δ = 4.62 (m, 4H, *CH*₂CF₂), δ = 2.58 (m, 4H, CH₂O).

### Example 4: Preparation of the compound of the formula 104.

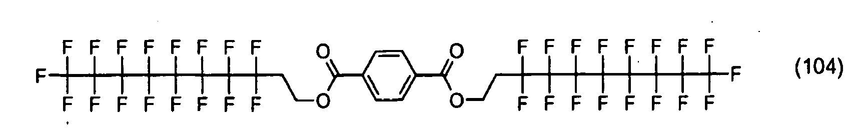

5 g (11.3 mmol) of the fluorinated alcohol (Zonyl BA-L) and 1.1g (11.3 mmol) of dry triethylamine are dissolved in 20 ml of toluene. 1.16g (5.7 mmol) of terephthaloyl chloride is dissolved in 10 ml of toluene and slowly dropped to the reaction mixture at 20°C under nitrogen atmosphere. The reaction mixture is stirred for 8 hours at 20°C. The solvent is evaporated and the raw product is purified by recrystallisation from ethanol to give 3.8 g (63 %) of the compound of the formula 104, m.p. 110°C. ¹H NMR: (400 MHz, CDCl₃): δ = 8.10 (s, 4H, *CH*=), δ = 4.62 (m, 4H, *CH₂*CF₂), δ = 2.58 (m, 4H, CH₂O)

### Example 5: Preparation of the compound of the formula 105.

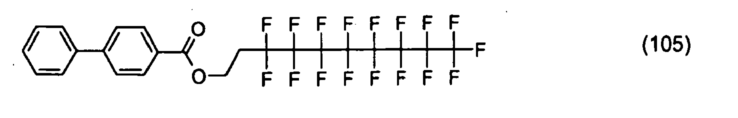

2.4 g (5.5 mmol) of the fluorinated alcohol (Zonyl BA-L) and 0.5g (5.5 mmol) of dry triethylamine are dissolved in 20 ml of toluene. 1.2g (5.5 mmol) of 4-biphenylcarbonyl chloride is dissolved in 10 ml of toluene and slowly dropped to the reaction mixture at 20°C under nitrogen atmosphere. The reaction mixture is stirred for 8 hours at 20°C. The solvent is evaporated and the raw product is purified by recrystallisation from ethanol to give 1.8 g (51 %) of the compound of the formula 106, m.p. 83°C. ¹H NMR: (400 MHz, CDCl₃): δ = 8.10 (m; 2H, *CH*=), δ = 7.83 (m, 2H, *CH*=), δ = 7.65 (m, 2H, *CH*=), δ = 7.47 (m, 2H, *CH*=), δ = 7.42 (m, 1H, *CH*=), δ = 4.66 (m, 4H, *CH*₂CF₂), δ = 2.63 (m, 4H, CH₂O)

### Example 6: Preparation of the compound of the formula 106.

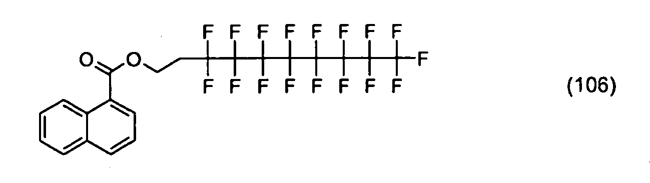

11.6 g (26.2 mmol) of the fluorinated alcohol (Zonyl BA-L) and 2.6 g (26.2 mmol) of dry triethylamine are dissolved in 20 ml of toluene. 5 g (26.2 mmol) of 4-biphenylcarbonyl chloride is dissolved in 10ml of toluene and slowly dropped to the reaction mixture at 20°C under nitrogen atmosphere. The reaction mixture is stirred for 8 hours at 20°C. The solvent is evaporated and the raw product is purified by column chromatography using toluene as solvent. The pure fractions are collected and the solvent distilled off to give 12.3 g (76 %) of the compound of the formula 107, m.p. 49°C. ¹H NMR: (400 MHz, CDCl₃): δ = 8.96 (m, 1H, *CH*=), δ = 8.23 (m, 1H, *CH*=), δ = 8.05 (m, 1 H, *CH*=), δ = 7.90 (m, 1 H, *CH*=), δ = 7.64 (m, 1 H, *CH*=), δ = 7.56 (m, 2H, *CH*=), δ = 4.66 (m, 4H, *CH*₂CF₂), δ = 2.63 (m, 4H, CH₂O).

### Example 7: Preparation of a mixture of compounds of the formula 104, 109 and 107B (compound 107).

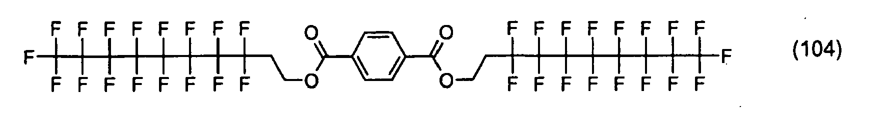

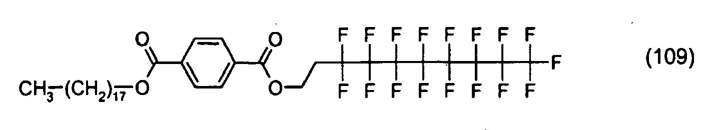

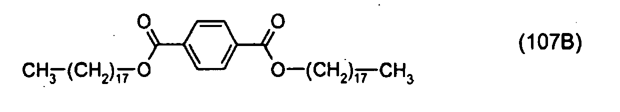

17.8 g (40.0 mmol) of the fluorinated alcohol (Zonyl BA-L), 10.8 g (40.0 mmol) of 1-octadecanol and 8.90 g (88.0 mmol) of triethylamine are dissolved in 200 ml of toluene. 16.2 g (80 mmol) of terephthaloyl chloride is dissolved in 50 ml of toluene and slowly dropped to the reaction mixture at 50°C under nitrogen atmosphere. The reaction mixture is heated up under reflux for 12 hours. After cooling down to room temperature, diethyl ether (200 ml) is added and the organic phase is washed repeatedly with water until pH neutral. The organic phase is dried over MgSO₄, filtered and concentrated using a vacuum rotary evaporator to give 45.5 g of a yellow solid. The crude solid is purified by flash chromatography (hexane/diethyl ether: 14:1) to give 18.3 g of a three components mixture (compound 107), pale yellow solid, m.p. 68-79°C. ¹H NMR: (300 MHz, CDCl₃): δ = 8.15-8.05 (m, ArH); 4.75-4.60 (m, OC*H*₂CH₂CF₂); 4.45-4.30 (m, O*CH*₂CH₂CH₂); 2.75-2.55 (m, OCH₂*CH*₂CF₂); 1.85-1.70 (m, OCH₂*CH*₂CH₂); 1.55-1.15 (m, CH₂); 0.95-0.80 (m, CH₃).

### Example 8: Preparation of a mixture of compounds of the formula 104, 109 and 107B (compound 108).

8.87 g (20.0 mmol) of the fluorinated alcohol (Zonyl BA-L), 16.2 g (60.0 mmol) of 1-octadecanol and 8.90 g (88.0 mmol) of triethylamine are dissolved in 200 ml of toluene. 16.2 g (80 mmol) of terephthaloyl chloride is dissolved in 50 ml of toluene and slowly dropped to the reaction mixture at 50°C under nitrogen atmosphere. The reaction mixture is heated up under reflux for 12 hours. After cooling down to room temperature, diethyl ether (200 ml) is added and the organic phase is washed repeatedly with water until pH neutral. The organic phase is dried over MgSO₄, filtered and concentrated using a vacuum rotary evaporator to give 35.5 g of a pale yellow solid. The crude solid is purified by flash chromatography (hexane/diethyl ether: 14:1) to give 12.4 g of a three components mixture (compound 108), white solid, m.p. 63-85°C. ¹H NMR: (300 MHz, CDCl₃): δ = 8.20-8.05 (m, ArH); 4.75-4.65 (m, OC*H*₂CH₂CF₂); 4.45-4.30 (m, O*CH*₂CH₂CH₂); 2.75-2.55 (m, OCH₂CH₂CF₂); 1.90-1.70 (m, OCH₂*CH*₂CH₂); 1.55-1.15 (m, CH₂); 0.95-0.80 (m, CH₃).

### Example 9: Isolation of the compound of the formula 109.

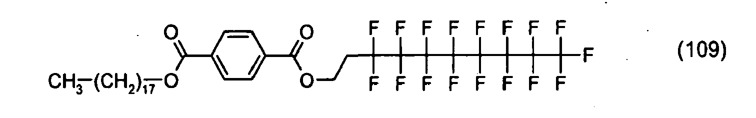

Compound 109 is isolated as pure compound from the crude product according to Example 8 by flash chromatography (hexane/diethylether: 10:1). White solid, m.p. 70-71°C. ¹H NMR: (400 MHz, CDCl₃): δ = 8.18-8.10 (m, ArH, 4H); 4.68 (t, *J* = 6.4 Hz, OC*H*₂CH₂CF₂,2H); 4.36 (*t*, *J* = 6.8 Hz, O*CH₂*CH₂CH₂, 2H); 2.75-2.55 (m, OCH₂C*H*₂CF₂, 2H); 1.85-1.75 (m, OCH₂*CH*₂CH₂, 2H); 1.60-1.20 (m, CH₂, 30H); 0.90 (*t, J* = 6.8 Hz, CH₃, 3H).

### Example 10: Preparation of the compound of the formula 110.

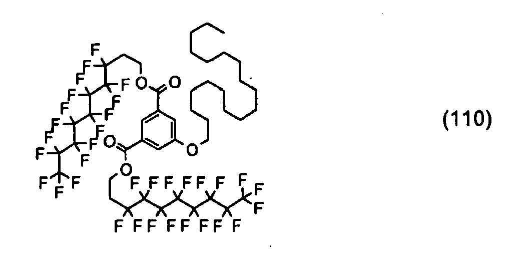

3.56 g (7.54 mmol) of 5-(octadecyloxy)isophthalic acid chloride and 1.53 g (15.1 mmol) of triethylamine are dissolved in 20 ml of toluene. 6.35 g (14.3 mmol) of the fluorinated alcohol (Zonyl BA-L) is added slowly to the reaction mixture at room temperature under nitrogen atmosphere. The reaction mixture is stirred for 2 hours at room temperature. After cooling down to room temperature, diethyl ether (50 ml) is added and the organic phase is washed repeatedly with water until pH neutral. The organic phase is dried over Na₂SO₄, filtered and concentrated using a vacuum rotary evaporator to give 9.50 g of a brown solid. The crude solid is purified by crystallization in hexane to give 6.20 g (65%) of the compound of formula 110, yellow solid, m.p. 70-136°C. ¹H NMR: (300 MHz, CDCl₃): δ = 8.26-8.22 (m, ArH, 1H); 7.80-7.75 (m, ArH, 2H); 4.67 (t, *J* = 6.6 Hz, OC*H*₂CH₂CF₂,4H); 4.05 (*t*, *J* = 6.6 Hz, ArOC*H*₂,. 2H); 2.75-2.55 (m, OCH₂C*H*₂CF₂, 4H); 1.90-1.75 (m, ArOCH₂C*H*₂, 2H); 1.60-1.20 (m, CH₂, 30H); 0.90 (*t*, *J* = 6.6 Hz, CH₃, 3H).

### Example 11: Preparation of the compound of the formula 111.

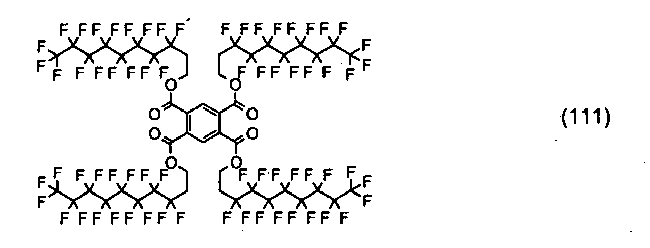

A mixture of 1.63 g (5.11 mmol) of tetramethylpyromellitate, 9.06 g (20.4 mmol) of the fluorinated alcohol (Zonyl BA-L) and 53 mg of di-N-butyltin oxide is heated up to 160°C for 24 hours. After cooling down to room temperature, the solid residue is washed with acetone and dried under vacuum to give 7.70 g of the compound of formula 111 contaminated with the tris- and bis-transesterified compounds, brown solid, m.p. 70-84°C. ¹H NMR: (400 MHz, TFA): δ = 8.40-8.20 (m, ArH); 4.95-4.75 (m, OCH₂CH₂CF₂); 4.16 (s, OCH₃); 2.85-2.65 (m, OCH₂CH₂CF₂).

### Example 12: Water and oil repellency in polypropylene.

In order to determine the repellency properties of the compounds of the formula I, they are tested according to the following procedure. The sample preparation is a combination of polypropylene nonwovens and the additive and a thermal treatment (e.g. 130°C for 10 minutes), which enables the migration of the additive to the surface and a proper surface rearrangement of the chemical groups. This extra heat cycle is needed to melt the compounds of the formula I in order to obtain a homogeneous redistribution over the surface of the substrate. An industrial sample of polypropylene nonwoven, fabric weight: 40 g/m², is dipped into a 1% isopropanol solution of the test compound, simultaneously applying ultrasonic energy for one minute. After that, the sample is dried overnight at room temperature and then two hours at 90°C in an oven. A part of the sample is afterwards annealed for 10 minutes at 130°C.

The treated nonwoven samples are evaluated in the water repellency test similar to INDA test method 80.8 (99). The wetting behavior of the nonwovens is tested with a series of water/ isopropanol mixtures. The observation of the wetting behavior is rated from 0 (water wetting, no repellency) to 10 (optimum water repellency). The results are summarized in Table 1.

**Table 1:**

| Example | Compound | Water repellency after drying | Water repellency after annealing |
|---|---|---|---|
| 12a^{a)} | --- | 2 | 2 |
| 12b^{b)} | 101 | 7 | 10 |
| 12c^{b)} | 102 | 8 | 8 |
| 12d^{b)} | 103 | 5 | 4 |
| 12e^{b)} | 104 | 3 | 10 |
| 12f^{b)} | 105 | 9 | 9 |
| 12g^{b)} | 106 | 7 | 7 |
| 12h^{b)} | 107 | 9 | 9 |
| 12i^{b)} | 108 | 8 | 9 |
| 12j^{b)} | 109 | 9 | 9 |
| 12k^{b)} | 110 | 10 | 9 |
| 12l^{b)} | 111 | 7 | 10 |

| | | | |
|---|---|---|---|
| a) Comparative Example. b) Example according to the invention. | | | |

The treated nonwoven samples are evaluated in the oil repellency test similar to AATCC test method 118-1997 / ISO 14419. This test follows the same concepts of the already described for water repellency test method, but using, as test solvents, a series of hydrocarbons. The observation of the wetting behavior is rated from 0 (no repellency) to 8 (optimum repellency). The results are summarized in Table 2.

**Table 2:**

| Example | Compound | Oil repellency after drying | Oil repellency after annealing |
|---|---|---|---|
| 12m^{a)} | --- | 0 | 0 |
| 12n^{b)} | 101 | 5 | 6 |
| 12o^{b)} | 102 | 5 | 3 |
| 12p^{b)} | 105 | 2 | 3 |
| 12q^{b)} | 110 | 7 | 4 |
| 12r^{b)} | 111 | 2 | 8 |

| | | | |
|---|---|---|---|
| a) Comparative Example. b) Example according to the invention. | | | |

### Example 13: Water and oil repellency in polypropylene nonwoven fibers.

The compounds of formula I are mixed with polypropylene powder or pellets at room temperature and extruded via a twin-screw extruder. The molten polymer and additive exit via a round die and is immediately cooled and solidified in a cold-water trough. The solidified strand is fed into a pelletizer. The polypropylene used for the meltblown processing is HL 508 FB from Borealis (melt flow rate 800g/10 min). Alternatively, the compounds of formula I are made into masterbatches by those skilled in the technique. The masterbatch at the desired level is then tumble mixed with the appropriate polypropylene for making spunbond and meltblown nonwovens.

The concentrate pellets are let down with additional polypropylene pellets and are mixed with a mixer, resulting in a desired additive concentration by weight (tumble mixing).

Meltblown process: Meltblown polypropylene fibers are prepared using a custom-built 6-inch Melt Blowing Pilot Line, under the following conditions: Extruder temperature of 175-265°C; die temperature of 240 and 270°C, respectively; throughput 4.4 kg/h; and spin drum speed is adjusted to produce a nonwoven with a specific basis weight. The fabric weight is measured in gm⁻² (gram per square meter).

The nonwoven samples are evaluated in the water/alcohol repellency test similar to INDA test method 80.8 (99). The wetting behavior of the nonwovens is tested with a series of wa-ter/isopropanol mixtures. The observation of the wetting behavior is rated from 0 (water wetting, no repellency) to 10 (optimum water repellency). The results are summarized in Table 2.

The treated nonwoven samples are also evaluated in the oil repellency test similar to AATCC test method 118-1997/IS0 14419. This test follows the same concepts of the already described water repellency test method, but using, as test solvents, a series of hydrocarbons. The observation of the wetting behavior is rated from 0 (no repellency) to 8 (optimum repellency). The results are summarized in Table 3.

**Table 2:**

| Example | Compound | Die temperature | Fabric weight | Water repellency as received | Water repellency after annealing^{c)} |
|---|---|---|---|---|---|
| 13a^{a)} | --- | 240 | 20 | 2 | 2 |
| 13b^{b)} | 1% 101 | 240 | 20 | 6 | 10 |
| 13c^{b)} | 2% 101 | 240 | 20 | 5 | 10 |
| 13d^{b)} | 1% 104 | 240 | 20 | 6 | 8 |
| 13e^{b)} | 2% 104 | 240 | 20 | 8 | 9 |
| 13f^{b)} | 1% 101 | 240 | 40 | 5 | 10 |
| 13g^{b)} | 2% 101 | 240 | 40 | 5 | 10 |
| 13h^{b)} | 1% 104 | 240 | 40 | 7 | 9 |
| 13i^{b)} | 2% 104 | 240 | 40 | 8 | 8 |
| 13j^{b)} | 1% 101 | 270 | 20 | 7 | 10 |
| 13k^{b)} | 2% 101 | 270 | 20 | 9 | 10 |
| 13l^{b)} | 1% 104 | 270 | 20 | 7 | 9 |
| 13m^{b)} | 2% 104 | 270 | 20 | 8 | 9 |
| 13n^{b)} | 1%101 | 270 | 40 | 7 | 10 |
| 13o^{b)} | 2% 101 | 270 | 40 | 9 | 10 |
| 13p^{b)} | 1% 104 | 270 | 40 | 7 | 8 |
| 13q^{b)} | 2% 104 | 270 | 40 | 9 | 9 |
| 13r^{b)} | 1% 101 | 270 | 70 | 6 | 10 |
| 13s^{b)} | 2% 101 | 270 | 70 | 9 | 10 |
| 13t^{b)} | 1% 104 | 270 | 70 | 8 | 9 |
| 13u^{b)} | 2% 104 | 270 | 70 | 9 | 9 |

**Table 3:**

| Example | Compound | Die temperature | Fabric weight | Oil repellency as received | Oil repellency after annealing^{c)} |
|---|---|---|---|---|---|
| 13a^{a}) | --- | 240 | 20 | 0 | 0 |
| 13b^{b}) | 1% 101 | 240 | 20 | 0 | 6 |
| 13c^{b)} | 2% 101 | 240 | 20 | 0 | 7 |
| 13d^{b)} | 1% 104 | 240 | 20 | 1 | 3 |
| 13e^{b)} | 2% 104 | 240 | 20 | 1 | 5 |
| 13f^{b)} | 1% 101 | 240 | 40 | 0 | 7 |
| 13g^{b)} | 2% 101 | 240 | 40 | 1 | 7 |
| 13h^{b)} | 1% 104 | 240 | 40 | 1 | 3 |
| 13i^{b)} | 2% 104 | 240 | 40 | 1 | 5 |
| 13j^{b)} | 1% 101 | 270 | 20 | 1 | 6 |
| 13k^{b)} | 2% 101 | 270 | 20 | 1 | 6 |
| 13l^{b)} | 1% 104 | 270 | 20 | 1 | 3 |
| 13m^{b)} | 2% 104 | 270 | 20 | 1 | 3 |
| 13n^{b)} | 1% 101 | 270 | 40 | 1 | 6 |
| 13o^{b)} | 2% 101 | 270 | 40 | 1 | 6 |
| 13p^{b)} | 1% 104 | 270 | 40 | 1 | 3 |
| 13q^{b)} | 2% 104 | 270 | 40 | 1 | 3 |
| 13r^{b)} | 1% 101 | 270 | 70 | 1 | 6 |
| 13s^{b)} | 2% 101 | 270 | 70 | 1 | 6 |
| 13t^{b)} | 1% 104 | 270 | 70 | 1 | 5 |
| 13u^{b)} | 2% 104 | 270 | 70 | 3 | 5 |

| | | | | | |
|---|---|---|---|---|---|
| a) Comparative Example. b) Example according to the invention. c) Annealing in oven at 130°C for 10 minutes. | | | | | |

### Example 14: Water and oil repellency in continuous polypropylene fibers.

Compounding: The compounding of the compounds of formula I is prepared as described in Example 13. The polypropylene used for the fiber spinning processing is Moplen HP 552R from Basell (melt flow rate 25g/10 min).

Fiber spinning process: Continuous polypropylene multifilament fibers are prepared using a fiber spinning line, under the following conditions: Extruder temperature of 175-240°C, die temperature of 280°C, 40 filaments. Spin pump speed is adjusted to produce fibers with a specific weight of 2 denier. The fibers are then knitted to socks.

The knitted PP samples are evaluated in the water/alcohol repellency and oil repellency, respectively, as described in Example 13. The results are summarized in Tables 4 and 5.

**Table 4:**

| Example | Compound | Die temperature | Water repellency as received | Water repellency after annealing^{c)} |
|---|---|---|---|---|
| 14a^{a)} | --- | 280 | 1 | 1 |
| 14b^{b)} | 1% 101 | 280 | 2 | 9 |
| 14c^{b)} | 2% 101 | 280 | 0 | 9 |
| 14d^{b)} | 1% 104 | 280 | 1 | 8 |
| 14e^{b)} | 2% 104 | 280 | 1 | 8 |

**Table 5:**

| Example | Compound | Die temperature | Oil repellency as received | Oil repellency after annealing^{c)} |
|---|---|---|---|---|
| 14a^{a}) | --- | 280 | 0 | 0 |
| 14b^{b)} | 1% 101 | 280 | 0 | 4 |
| 14c^{b)} | 2% 101 | 280 | 0 | 4 |
| 14d^{b)} | 1% 104 | 280 | 0 | 2 |
| 14e^{b)} | 2% 104 | 280 | 0 | 2 |

| | | | | |
|---|---|---|---|---|
| a) Comparative Example. b) Example according to the invention. c) Annealing in oven at 130°C for 10 minutes. | | | | |

## Claims

1. A compound of the formula I 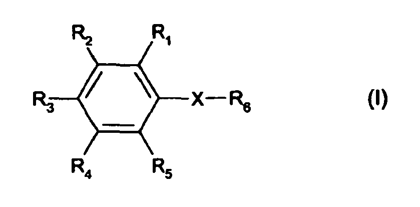 wherein
R₁, R₂, R₃, R₄ and R₅ independently of each other is hydrogen, C₁-C₂₅alkyl, C₁-C₂₅alkoxy, C₇-C₉phenylalkyl, phenyl, 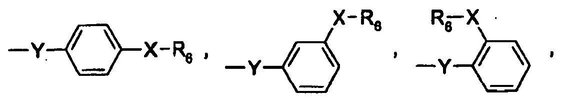 -X-R₆ or each pair of substituents R₁ and R₂ or R₂ and R₃, together with the linking carbon atoms, forms 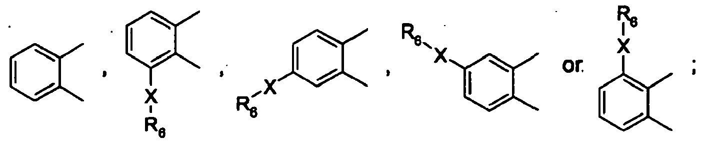 and with the proviso that at least two radicals from the group of R₁ to R₅ are hydrogen; and with the proviso that at least one of the radicals from the group of R₁ to R₅ is not hydrogen;
R₆ is C₁-C₂₅ fluoroalkyl C₁-C₂₅alkyl; with the proviso that the compound of the formula I contains at least one -X-R₆ group wherein R₆ is C₁-C₂₅fluroalkyl
X is 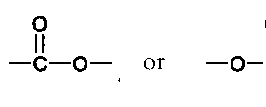 Y is a direct bond, methylene, -CH(CH₃)- or -C(CH₃)₂-;
with the proviso that the compound of the formula I is excluded, when R₁, R₂, R₄ and R₅ are hydrogen, R₃ is -X-R₆, X is 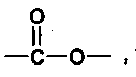 wherein the carbonyl group is attached to the benzene ring, and R₆ is -CH₂CH₂(CF₂)₇CF₃.

2. A compound according to claim 1, wherein
R₁, R₂, R₃, R₄ and R₅ independently of each other is hydrogen, C₁-C₈alkyl, C₄-C₁₈alkoxy, phenyl, -X-R₆ or the pair of substituents R₁ and R₂, together with the linking carbon atoms, forms a benzene ring; and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl or C₁-C₁₈alkyl; with the proviso that the compound of the formula I contains at least one -X-R₆ group wherein R₆ is C₁-C₂₅fluoroalkyl;
X is 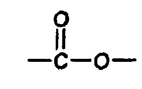 wherein the carbonyl group is attached to the aromatic ring.

3. A composition comprising
a) a natural semisynthetic or synthetic polymer and
b) at least one melt additive of a compound of claim1.
with the proviso that, when R₁, R₂, R₄ and R₅ are hydrogen, R₃ is -X-R₆, X is 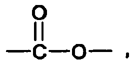 wherein the carbonyl group is attached to the benzene ring, and R₆ is -CH₂CH₂(CF₂)₇CF₃, component (a) is not a fluorine atom-containing polymer.

4. A composition according to claim 3, wherein
R₁, R₂, R₃, R₄ and R₅ independently of each other is hydrogen, C₁-C₁₈alkyl, C₁-C₁₈alkoxy, benzyl, phenyl, -X-R₆ or each pair of substituents R₁ and R₂ or R₂ and R₃, together with the linking carbon atoms, forms a benzene ring; and with the proviso that at least two radicals from the group of R₁ to R₅ are hydrogen; and with the proviso that at least one of the radicals from the group of R₁, to R₅ is not hydrogen.

5. A composition according to claim 3, wherein X is 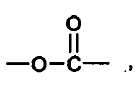 wherein the carbonyl group is attached to the aromatic ring.

6. A compound according to claim 3, wherein
R₁, R₂, R₃,R₄ and R₅ independently of each other is hydrogen, C₁-C₈alkyl, C₄-C₁₈alkoxy, phenyl, -X-R₆ or the pair of substituents R₁ and R₂, together with the linking carbon atoms, forms a benzene ring; and with the proviso that at least two radicals from the group of R₁ to R₅ are hydrogen; and with the proviso that at least one of the radicals from the group of R₁ to R₅ is not hydrogen;
R₆ is C₁-C₂₅fluoroalkyl or C₁-C₁₈alkyl;
X is 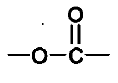 wherein the carbonyl group is attached to the aromatic ring.

7. A composition according to claim 3, wherein
R₁ is hydrogen or C₁-C₄alkyl.
R₂ is hydrogen, C₁-C₄alkyl, -X-R₆, or the pair of substituents R₁ and R₂, together with the linking carbon atoms, forms a benzene ring,
R₃ is hydrogen, C₁-C₄alkyl, phenyl or -X-R₆,
R₄ is hydrogen, C₁-C₄alkyl, C₄-C₁₈alkoxy or -X-R₆,
R₅ is hydrogen or -X-R₆; and with the proviso that at least two radicals from the group of R₁ to R₅ are hydrogen; and with the proviso that at least one of the radicals from the group of R₁ to R₅ is not hydrogen;
R₆ is C₄-C₁₈fluoroalkyl or C₁-C₁₈alkyl; with the proviso that the compound of the formula I contains at least one -X-R₆ group wherein R₆ is C₄-C₁₈fluoroalkyl; and
X is 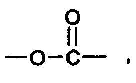 wherein the carbonyl group is attached to the aromatic ring.

8. A composition according to claim 3, wherein
R₁ is hydrogen,
R₂ is hydrogen, -X-R₆, or the pair of substituents R₁ and R₂, together with the linking carbon atoms, forms a benzene ring,
R₃ is hydrogen, phenyl or -X-R₆,
R₄ is hydrogen, C₄-C₁₈alkoxy or -X-R₆,
R₅ is hydrogen or -X-R₆; and with the proviso that at least two radicals from the group of R₁ to R₅ are hydrogen; and with the proviso that at least one of the radicals from the group of R₁ to R₆ is not hydrogen;
R₆ is -CH₂CH₂(CF₂)₇CF₃ or C₁-C₁₈alkyl; with the proviso that the compound of the formula I contains at least one -X-R₆ group wherein R₆ is -CH₂CH₂(CF₂)₇CF₃; and
X is 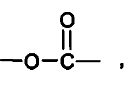 wherein the carbonyl group is attached to the aromatic ring.

9. A composition according to claim 3 wherein component (a) is a synthetic polymer.

10. A composition according to claim 3 wherein component (b) is present in an amount of from 0.01 to 10 %, based on the weight of component (a).

11. A composition according to Claim 3, comprising in addition, besides components (a) and (b), further additives.

12. A composition according to claim 11, comprising as further additives phenolic antioxidants, light-stabilizers and/or processing stabilizers.

13. A process for reducing the surface energy of organic materials which comprises incorporating into the organic material at least one compound according to claim 1.

14. Use of a compound according to claim 1 as reducer of surface energy of an organic material.

## Patentansprüche

1. Verbindung der Formel I 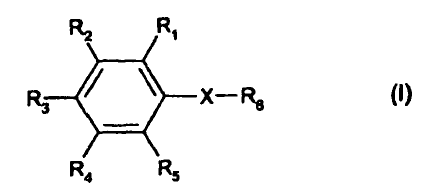 worin
R₁, R₂, R₃, R₄ und R₅, unabhängig voneinander, Wasserstoff, C₁-C₂₅-Alkyl, C₁-C₂₅-Alkoxy, C₇-C₉-Phenylalkyl, Phenyl, 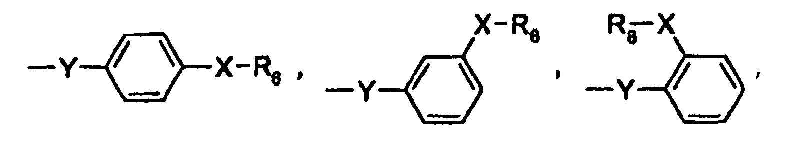 -X-R₆ darstellen, oder
jedes Paar von Substituenten R₁ und R₂ oder R₂ und R₃, zusammen mit den bindenden Kohlenstoffatomen, 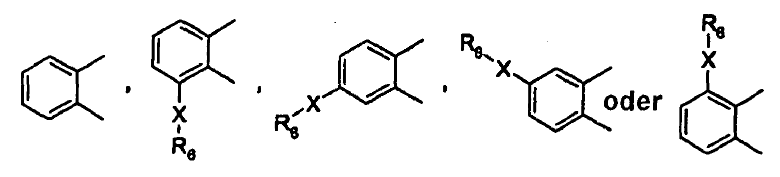 bildet;
und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt;
R₆ C₁-C₂₅-Fluoralkyl oder C₁-C₂₅-Alkyl darstellt; mit der Maßgabe, dass die Verbindung der Formel I mindestens eine Gruppe -X-R₆ enthält, worin R₆ C₁-C₂₅-Fluoralkyl darstellt; 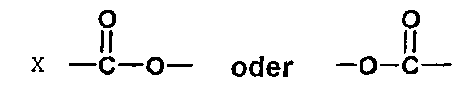 darstellt;
Y eine direkte Bindung, Methylen, -CH (CH₃)- oder -C (CH₃)₂-darstellt; mit der Maßgabe, dass die Verbindung der Formel I ausgeschlossen ist, wenn R₁, R₂, R₄ und R₅ Wasserstoff darstellen, R₃ -X-R₆ darstellt, X 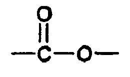 darstellt, wobei die Carbonylgruppe an den Benzolring gebunden ist, und R₆ -CH₂CH₂(CF₂)₇CF₃ darstellt.

2. Verbindung nach Anspruch 1, worin
R₁, R₂, R₃, R₄ und R₅, unabhängig voneinander, Wasserstoff, C₁-C₈-Alkyl, C₄-C₁₈-Alkoxy, Phenyl, -X-R₆ darstellen, oder das Paar von Substituenten R₁ und R₂, zusammen mit den verbindenden Kohlenstoffatomen, einen Benzolring bildet; und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt;
R₆ C₁-C₂₅-Fluoralkyl oder C₁-C₁₈-Alkyl darstellt; mit der Maßgabe, dass die Verbindung der Formel I mindestens eine Gruppe -X-R₆ enthält, worin R₆ C₁-C₂₅-Fluoralkyl darstellt;
X 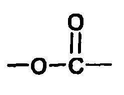 darstellt; wobei die Carbonylgruppe an den aromatischen Ring gebunden ist.

3. Zusammensetzung, umfassend
a) ein natürliches, halbsynthetisches oder synthetisches Polymer; und
b) mindestens einen Schmelzzusatz von einer Verbindung nach Anspruch 1;
mit der Maßgabe, dass, wenn R₁, R₂, R₄ und R₅ Wasserstoff darstellen, R₃ -X-R₆ darstellt, X 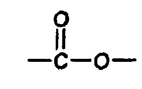 darstellt, wobei die Carbonylgruppe an den Benzolring gebunden ist, und R₆ -CH₂CH₂(CF₂)₇CF₃ darstellt, Komponente (a) kein Fluoratom-enthaltendes Polymer darstellt.

4. Zusammensetzung nach Anspruch 3, worin
R₁, R₂, R₃, R₄ und R₅, unabhängig voneinander, Wasserstoff, C₁-C₁₈-Alkyl, C₁-C₁₈-Alkoxy, Benzyl, Phenyl, -X-R₆ darstellen, oder jedes Paar von Substituenten R₁ und R₂ oder R₂ und R₃, zusammen mit den verbindenden Kohlenstoffatomen, einen Benzolring bildet; und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt.

5. Zusammensetzung nach Anspruch 3, worin X 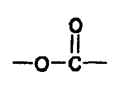 darstellt; wobei die Carbonylgruppe an den aromatischen Ring gebunden ist.

6. Verbindung nach Anspruch 3, worin
R₁, R₂, R₃, R₄ und R₅, unabhängig voneinander, Wasserstoff, C₁-C₈-Alkyl, C₄-C₁₈-Alkoxy, Phenyl, -X-R₆ darstellen, oder das Paar von Substituenten R₁ und R₂, zusammen mit den verbindenden Kohlenstoffatomen, einen Benzolring bildet; und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt;
R₆ C₁-C₂₅-Fluoralkyl oder C₁-C₁₈-Alkyl darstellt;
X 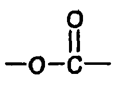 darstellt; wobei die Carbonylgruppe an den aromatischen Ring gebunden ist.

7. Zusammensetzung nach Anspruch 3, worin
R₁ Wasserstoff oder C₁-C₄-Alkyl darstellt,
R₂ Wasserstoff, C₁-C₄-Alkyl, -X-R₆ darstellt, oder das Paar von Substituenten R₁ und R₂, zusammen mit den verbindenden Kohlenstoffatomen, einen Benzolring bildet,
R₃ Wasserstoff, C₁-C₄-Alkyl, Phenyl oder -X-R₆ darstellt,
R₄ Wasserstoff, C₁-C₄-Alkyl, C₄-C₁₈-Alkoxy oder -X-R₆ darstellt,
R₅ Wasserstoff oder -X-R₆ darstellt; und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt;
R₆ C₄-C₁₈-Fluoralkyl oder C₁-C₁₈-Alkyl darstellt; mit der Maßgabe, dass die Verbindung der Formel I mindestens eine Gruppe -X-R₆ enthält, worin R₆ C₄-C₁₈-Fluoralkyl darstellt; und
x 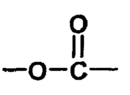 darstellt, wobei die Carbonylgruppe an den aromatischen Ring gebunden ist.

8. Zusammensetzung nach Anspruch 3, worin
R₁ Wasserstoff darstellt,
R₂ Wasserstoff, -X-R₆ darstellt, oder das Paar von Substituenten R₁ und R₂, zusammen mit den verbindenden Kohlenstoffatomen, einen Benzolring bildet,
R₃ Wasserstoff, Phenyl oder -X-R₆ darstellt,
R₄ Wasserstoff, C₄-C₁₈-Alkoxy oder -X-R₆ darstellt,
R₅ Wasserstoff oder -X-R₆ darstellt; und mit der Maßgabe, dass mindestens zwei Reste aus der Gruppe von R₁ bis R₅ Wasserstoff darstellen; und mit der Maßgabe, dass mindestens einer der Reste aus der Gruppe von R₁ bis R₅ nicht Wasserstoff darstellt;
R₆ -CH₂CH₂(CF₂)CF₃ oder C₁-C₁₈-Alkyl darstellt; mit der Maßgabe, dass die Verbindung der Formel I mindestens eine Gruppe -X-R₆ enthält, worin R₆ -CH₂CH₂(CF₂)₇CF₃ darstellt; und
X 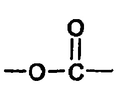 darstellt, wobei die Carbonylgruppe an den aromatischen Ring gebunden ist.

9. Zusammensetzung nach Anspruch 3, worin Komponente (a) ein synthetisches Polymer darstellt.

10. Zusammensetzung nach Anspruch 3, worin Komponente (b) in einer Menge von 0,01 bis 10 %, bezogen auf das Gewicht von Komponente (a), vorliegt.

11. Zusammensetzung nach Anspruch 3, umfassend zusätzlich, neben Komponenten (a) und (b), weitere Additive.

12. Zusammensetzung nach Anspruch 11, umfassend, als weitere Additive phenolische Antioxidantien, Lichtstabilisatoren und/oder Verarbeitungsstabilisatoren.

13. Verfahren zum Vermindern der Oberflächenenergie von organischen Materialien, das Einarbeiten in das organische Material mindestens einer Verbindung nach Anspruch 1 umfasst.

14. Verwendung einer Verbindung nach Anspruch 1, als Verminderer der Oberflächenenergie von einem organischen Material.

## Revendications

1. Composé de formule I: 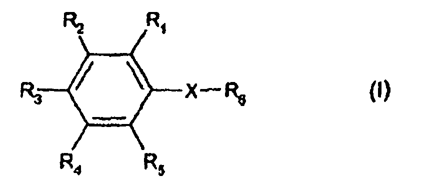 dans laquelle
R₁, R₂, R₃, R₄ et R₅ représentent, indépendamment les uns des autres, un atome d'hydrogène, un groupe alkyle en C₁ à C₂₅, alcoxy en C₁ à C₂₅, phénylalkyle en C₇ à C₉, phényle, -X-R₆ 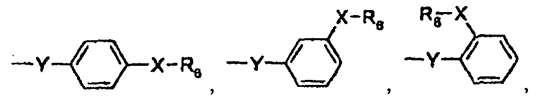 ou chaque paire de substituants R₁ et R₂ ou R₂ et R₃, conjointement avec les atomes de carbone
de liaison, forme un groupe 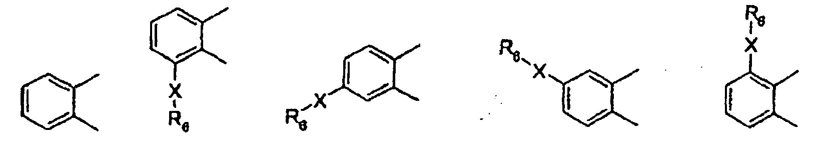 et à condition qu'au moins deux radicaux du groupe de substituants R₁ à R₅ représentent un atome d'hydrogène ; et à condition qu'au moins un des radicaux du groupe de substituants R₁ à R₅ ne représente pas un atome d'hydrogène ;
R₆ représente un groupe fluoroalkyle en C₁ à C₂₅ ou alkyle en C₁ à C₂₅ ; à condition que le composé de formule I contienne au moins un groupe -X-R₆ dans lequel R₆ représente un groupe fluoroalkyle en C₁ à C₂₅,
X représente un groupe -C(=O) -O - ou -O-C(=O)-;
Y représente une liaison directe, un groupe méthylène, -CH(CH₃)- ou -C(CH₃)₂- ;
à condition que le composé de formule I soit exclu, lorsque R₁, R₂, R₄ et R₅ représentent un atome d'hydrogène, R₃ représente un groupe -X-R₆, X représente un groupe -O-C(=O)- dans lequel le groupe carbonyle est lié au noyau benzénique, et R₆ représente un groupe -CH₂CH₂(CF₂)₇CF₃.

2. Composé selon la revendication 1, dans lequel :
R₁, R₂, R₃, R₄ et R₅ représentent, indépendamment les uns des autres, un atome d'hydrogène, un groupe alkyle en C₁ à C₈, alcoxy en C₄ à C₁₈, phényle, -X-R₆ ou la paire de substituants R₁ et R₂, conjointement avec les atomes de carbone de liaison, forme un noyau benzénique ; et à condition qu'au moins deux des radicaux du groupe de substituants R₁ à R₅ représentent un atome d'hydrogène ; et à condition qu'au moins un des radicaux du groupe de substituants R₁ à R₅ ne représente pas un atome d'hydrogène ;
R₆ représente un groupe fluoroalkyle en C₁ à C₂₅ ou alkyle en C₁ à C₁₈ ; à condition que le composé de formule I contienne au moins un groupe -X-R₆ dans lequel R₆ représente un groupe fluoroalkyle en C₁ à C₂₅ ;
X représente un groupe -O-C(=O)-, dans lequel le groupe carbonyle est lié au noyau aromatique.

3. Composition comprenant :
a) un polymère naturel, semi-synthétique ou synthétique, et
b) au moins un additif à l'état fondu d'un composé selon la revendication 1 ;
à condition que, lorsque R₁, R₂, R₄ et R₅ représentent un atome d'hydrogène, R₃ représente un groupe -X-R6, X représente un groupe -O-C(=O)-, dans lequel le groupe carbonyle est lié au noyau benzénique, et R₆ représente un groupe -CH₂CH₂(CF₂)₇CF₃, le composant (a) ne soit pas un polymère contenant un atome de fluor.

4. Composition selon la revendication 3, dans laquelle :
R₁, R₂, R₃, R₄ et R₅ représentent, indépendamment les uns des autres, un atome d'hydrogène, un groupe alkyle en C₁ à C₁₈, alcoxy en C₁ à C₁₈, benzyle, phényle, -X-R₆ ou chaque paire de substituants R₁ et R₂ ou R₂ et R₃, conjointement avec les atomes de carbone de liaison, forme un noyau benzénique ; et à condition qu'au moins deux des radicaux du groupe de substituants R₁ à R₅ représentent un atome d'hydrogène ; et à condition qu'au moins un des radicaux du groupe de substituants R₁ à R₅ ne représente pas un atome d'hydrogène.

5. Composition selon la revendication 3, dans laquelle X représente un groupe -O-C(=O)-, dans lequel le groupe carbonyle est lié au noyau aromatique.

6. Composé selon la revendication 3, dans lequel :
R₁, R₂, R₃, R₄ et R₅ représentent, indépendamment les uns des autres, un atome d'hydrogène, un groupe alkyle en C₁ à C₈, alcoxy en C₄ à C₁₈, phényle, -X-R₆ ou la paire de substituants R₁ et R₂, conjointement avec les atomes de carbone de liaison, forme un noyau benzénique ; et à condition qu'au moins deux des radicaux du groupe de substituants R₁ à R₅ représentent un atome d'hydrogène ; et à condition qu'au moins un des radicaux du groupe de substituants R₁ à R₅ ne représente pas un atome d'hydrogène ;
R₆ représente un groupe fluoroalkyle en C₁ à C₂₅ ou alkyle en C₁ à C₁₈ ;
X représente un groupe -O-C(=O)-, dans lequel le groupe carbonyle est lié au noyau aromatique.

7. Composition selon la revendication 3, dans laquelle :
R₁ représente un atome d'hydrogène ou un groupe alkyle en C₁ à C₄,
R₂ représente un atome d'hydrogène, un groupe alkyle en C₁ à C₄, -X-R₆, ou la paire de substituants R₁ et R₂, conjointement avec les atomes de carbone de liaison, forme un noyau benzénique,
R₃ représente un atome d'hydrogène, un groupe alkyle en C₁ à C₄, phényle ou -X-R₆,
R₄ représente un atome d'hydrogène, un groupe alkyle en C₁ à C₄, alcoxy en C₄ à C₁₈ ou -X-R₆,
R₅ représente un atome d'hydrogène ou un groupe -X-R₆ ; et à condition qu'au moins deux des radicaux du groupe de substituants R₁ à R₅ représentent un atome d'hydrogène ; et à condition qu'au moins un des radicaux du groupe de substituants R₁ à R₅ ne représente pas un atome d'hydrogène ;
R₆ représente un groupe fluoroalkyle en C₁ à C₁₈ ou alkyle en C₁ à C₁₈ ; à condition que le composé de formule 1 contienne au moins un groupe -X-R₆ dans lequel R₆ représente un groupe fluoroalkyle en C₁ à C₁₈ ; et
X représente un groupe -O-C(=O)-, dans lequel le groupe carbonyle est lié au noyau aromatique.

8. Composition selon la revendication 3, dans laquelle :
R₁ représente un atome d'hydrogène,
R₂ représente un atome d'hydrogène, un groupe -X-R₆, ou la paire de substituants R₁ et R₂, conjointement avec les atomes de carbone de liaison, forme un noyau benzénique,
R₃ représente un atome d'hydrogène, un groupe phényle ou -X-R₆,
R₄ représente un atome d'hydrogène, un groupe alcoxy en C₄ à C₁₈ ou -X-R₆,
R₅ représente un atome d'hydrogène ou un groupe -X-R₆ ; et à condition qu'au moins deux des radicaux du groupe de substituants R₁ à R₅ représentent un atome d'hydrogène ; et à condition qu'au moins un des radicaux du groupe de substituants R₁ à R₅ ne représente pas un atome d'hydrogène ;
R₆ représente un groupe -CH₂CH₂(CF₂)₇CF₃ ou alkyle en C₁ à C₁₈ ; à condition que le composé de formule I contienne au moins un groupe -X-R₆, dans lequel R₆ représente un groupe -CH₂CH₂(CF₂)₇CF₃ ; et
X représente un groupe, -O-C(=O)- dans lequel le groupe carbonyle est lié au noyau aromatique.

9. Composition selon la revendication 3, dans laquelle le composant (a) est un polymère synthétique.

10. Composition selon la revendication 3, dans laquelle le composant (b) est présent à raison de 0,01% à 10%, par rapport au poids du composant (a).

11. Composition selon la revendication 3, comprenant en outre, en plus des composants (a) et (b), des additifs supplémentaires.

12. Composition selon la revendication 11, comprenant en tant qu'additifs supplémentaire des antioxydants phénoliques, des photostabilisants et/ou des stabilisants de traitement.

13. Procédé de réduction de l'énergie de surface de matières organiques qui comprend l'incorporation dans la matière organique d'au moins un composé selon la revendication 1.

14. Utilisation d'un composé selon la revendication 1 en tant que réducteur de l'énergie de surface d'une matière organique.
